# EUROPEAN PATENT SPECIFICATION

(11) **EP 0 679 735 B1**
(45) Date of publication and mention of the grant of the patent: **23.05.2001**
(21) Application number: 95104696.0
(22) Date of filing: 30.03.1995
(51) Int. Cl.: C25C 7/06, B66C 13/08

(54) **Guide apparatus for up/down movement of a hoisting apparatus for delivery of electrode plates**
Führungssystem für die nach oben/unten Bewegung einer Hebevorrichtung die zum Transport von Elektrodeplatten dient
Système de guidage pour le mouvement vers le haut et vers le bas d'un appareil de levage servant au transport de plaques d'électrodes

(30) Priority: 28.04.1994 JP 9237794
(43) Date of publication of application: 02.11.1995
(73) Proprietor: MITSUI MINING & SMELTING CO., LTD., Tokyo (JP)
(72) Inventor: Kusano, Mineharu, Okayama (JP); Haiki, Kenji, Okayama (JP)
(74) Representative: Rapp, Bertram, Dr.

(56) References cited:
- EP-A- 0 044 594
- EP-A- 0 286 092
- EP-A- 0 347 784
- DE-A- 3 841 510
- GB-A- 2 115 441
- US-A- 3 426 878

## Description

### FIELD OF THE INVENTION

The present invention relates to a guide apparatus for up/down movement of a hoisting apparatus for delivery of electrode plates to and from an electrode plate stock space such as an electrolytic bath or a chain conveyor for delivery of electrode plates used, for instance, when replacing electrode plates in a facility for electrolytically refining copper.

### BACKGROUND OF THE INVENTION

From the state of the art according to European patent application EP-0 286 092 A1 an apparatus for hanging and handling plate members is known, which is provided with a plurality of hanger members, which are slidable along a supporting frame therefore and are able to space a part or bring together the hanging plate members.

The European patent application EP-0 347 784 A1 discloses an automatic charging member for positioning of heavy loads, particularly sheet-like objects as anods and cathods into electrolysis tanks. This charging member comprises a control frame, which is attached with turnbuckles to a loading member of a crane. To the control frame, there is attached a gripping device so that the gripping device is freely moved up and down by means of lifting wire ropes, whereby the motion of the gripping device in lateral direction is prevented by means of guiding members.

The patent application DE 3 841 510 A1 describes a hoisting device for hanging electrodes into an electrolytic bath. The device comprises a frame, which is horizontally and vertically movable. Another hoisting device for cathods in an electrolytic bath is shown in EP-0 044 594 A1.

As a generally known hoisting apparatus for delivery of electrode plates, there is the technology disclosed in Japanese Utility Model Laid Open Publication No.10123/1990 filed by the present applicant, and the apparatus is used for carrying electrode plates into or out from an electrolytic bath in a facility for electrolytically refining copper.

By the way, in the conventional type of hoisting apparatus for delivery of electrode plates as described above, anode plates and cathode plates each as an electrode plate are replaced with new ones at a specified period using an overhead crane, and during this work for replacing them, a specific operator, who gives signs concerning positioning of the hoisting apparatus to an operator of an overhead crane, stops the hoisting apparatus at a specified position against an electrolytic bath, and engages a hook with anode plates or cathode plates, is required at a place near the electrolytic bath, in addition to the overhead crane operator. Furthermore, the works carried out by this specific operator include fine adjustment of a position of the hoisting apparatus as well as of electrode plates in the electrolytic bath so that the electrode plates correctly engage the hook when carrying out the electrode plates from the electrolytic bath, and the works are manually carried out, so that the specific operator is required to be a skilled worker. In addition, the work for fine positional adjustment performed by the specific operator always accompanies risks such as cases where the hoisting apparatus fluctuates and an electrode plate drops, or where the operator's hand is held between electrode plates due to fluctuation of the hoisting apparatus, which is disadvantageous for operator's safety.

### OBJECTS AND SUMMARY OF THE INVENTION

The present invention was made in the light of the circumstances as described above, and it is an object of the present invention to provide a guide apparatus for up/down movement of a hoisting apparatus for delivery of electrode plates which does not need the specific operator as described above and can position a hoisting apparatus for electrode plates, when carrying in or carrying out electrode plates, at a specified position against electrode plates stocking place such as an electrolytic bath by suppressing fluctuation of the hoisting apparatus and prevent accidents such as drop or fall of an electrode plate, insures high safety for operators, and enables automation of a work for replacing electrode plates.

In order to achieve the objects as described above, the guide apparatus for up/down movement of a hoisting apparatus for delivery of electrode plates according to the present invention has guide members formed as rotatable guide rollers (6) thrusting outwardly provided at a specified angle (Θ), preferably 45°, with respect to an extending piece (5), of said frame (1), which extending pieces extending in the same direction as the electrode plates (4) and provided at four corners of the frame (1) having a rectangular form when viewed from a top; and guide frames formed as guide rails (20) for guiding up/down movement of the hoisting apparatus (A) are provided in errect posture for engagement with the guide rollers (6) and fixedly connected to a base frame (23) arranged at the electrode plate stock space, wherein the guide rails, the number thereof being equal to that of the guide rollers (6), each having a substantially L-shaped cross-section and a guide length larger than height of the electrode plate (4) hoisted by the hoisting apparatus (A), the guide rollers (6) movably engage the inner surface angular section (25) of these guide rails (20), and further the upper edge section thereof is formed in an expanding section (26) for positioning, expanding upward and outward like a taper, the hoisting apparatus (A) being removeable from the guide rails (20) by lifting it by the overhead crane.

It is preferable that the guide members are formed as rotatable guide rollers so that the up/down movement of the hoisting apparatus for delivery of electrode plates becomes smooth because it's friction load is minimized. In a preferred embodiment, the electrode plate stock space serves as a chain conveyor for delivery of electrode plates. Furthermore in another preferred embodiment of the present invention, the electrode plate stock space serves as an electrolytic bath.

As described above, when replacing electrode plates, the hoisting apparatus for delivery of electrode plates moves with theguide members thrustingly provided in one side section as well as in another side section thereof engaging with an inner surface of the guide frame, so that the fluctuation is suppressed during up/down movement thereof and the hoisting apparatus can be located accurately at a specified position against the electrode plate stock space. Because of this feature, also fluctuation of not only the hoisting apparatus but also an electrode plate is eliminated almost completely. For this reason, the need for the fine positional adjustment of the hoisting apparatus and electrode plates manually performed by a specific operator is eliminated, and a work for replacement of electrode plates can be automated. In addition, also accidents such as drop or fall of an electrode plate can be prevented, which insures safety for operators, and also reliability of a hoisting apparatus for delivery of electrode plates is substantially improved.

### BRIEF DESCRIPTION OF THE INVENTION

Fig.1 is a front view of a up/down movement guide apparatus according to the present invention;
Fig.2 is a flat view of the guide apparatus above;
Fig.3 is a side view of the guide apparatus above;
Fig.4A is a partially omitted enlarged front view of a guide frame;
Fig.4B is a flat view of the guide frame above; and
Fig.5 is an enlarged front view of an edge section of a frame with a guide roller mounted thereon.

### DETAILED DESCRIPTION OF THE PREFERRED EMBODIMENTS

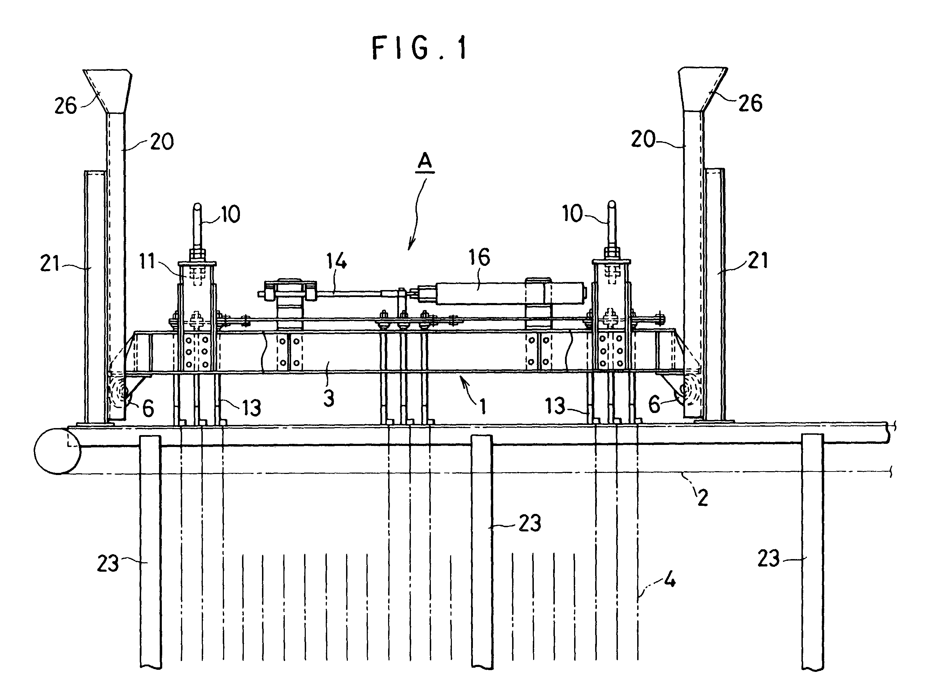

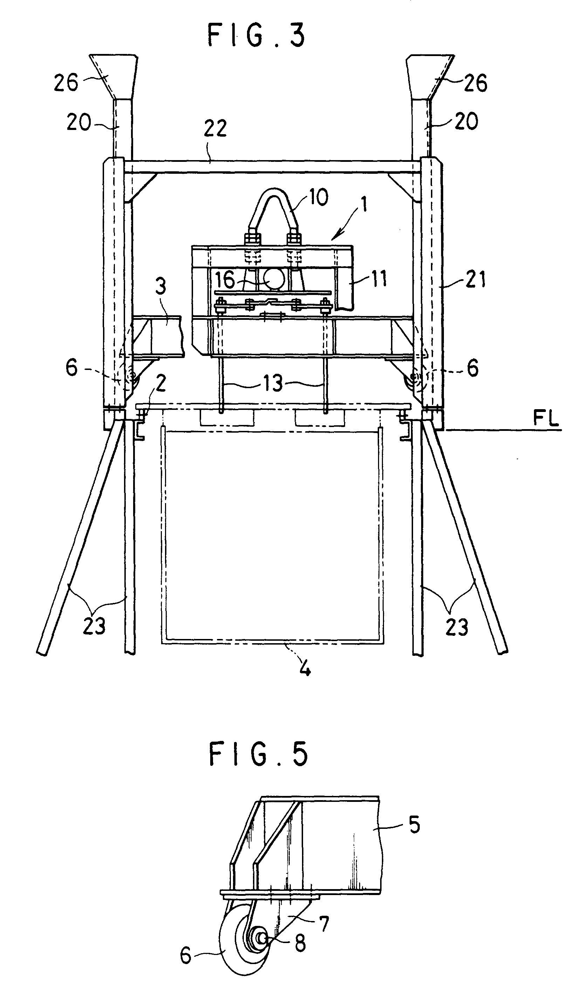

Fig.1 through Fig.3 show a case where an electrode plate stock space is a chain conveyor for delivery of electrode plates. In these figures, designated at A is a hoisting apparatus for delivery of electrode plates, and at 1 a frame for hoisting electrode plates constituting the hoisting apparatus A, which is moved by an overhead crane not shown herein to above a chain conveyor 2 and also moved up and down between the position above the chain conveyor 2 and the chain conveyor 2 by the same overhead crane when the hoisting apparatus A for delivery of electrode plates carries into or carries out electrode plates from the chain conveyor as an electrode plate stock space. The reference numeral 3 indicates a basic body of the frame 1 with the flat surface having a rectangular form and an extending piece 5 extending in the same direction as electrode plates 4 (shown as cathode plates in these figures) mounted on the conveyor 2 is fixed to each of the both sides of this basic body. Pivotably provided in both the edge sections of the extending piece 5 are provided guide rollers 6 as guide members each thrusting outward at a specified angle of θ. Various degrees of angle can be considered as an angle for mounting the guide roller 6, but 45° as shown in the figure is preferable because engagement with a guide frame to be described later can be carried out smoothly and accurately. The guide roller 6 is mounted with a pin 8 between a pair of mounting pieces 7 each fixed to the bottom surface of the both side edge sections of the extending pieces 5 as shown in Fig.5.

The reference numeral 10 indicates a pair of hangers for an overhead crane, and the hangers are provided on upper frames 11 which are provided at a specified space on upper surface of the basic body 3. Mounted on the frame 1 are electrode plate (cathode plate) hooks 13 which can pivot by almost 90 degrees between the position in the same direction as that of the electrode plate 4 and also in a direction crossing it at substantially right angles, and also an operating cylinder 16 pivoting the hook through a slide axis 14, an arm 15 or the like, so that the electrode plates 4 can be hoisted or moved in other ways in association with up/down movement of the hoisting apparatus A for delivery of electrode plates but the construction and the operations are substantially the same as those in the conventional type of apparatuses, so that detailed description thereof is omitted herein.

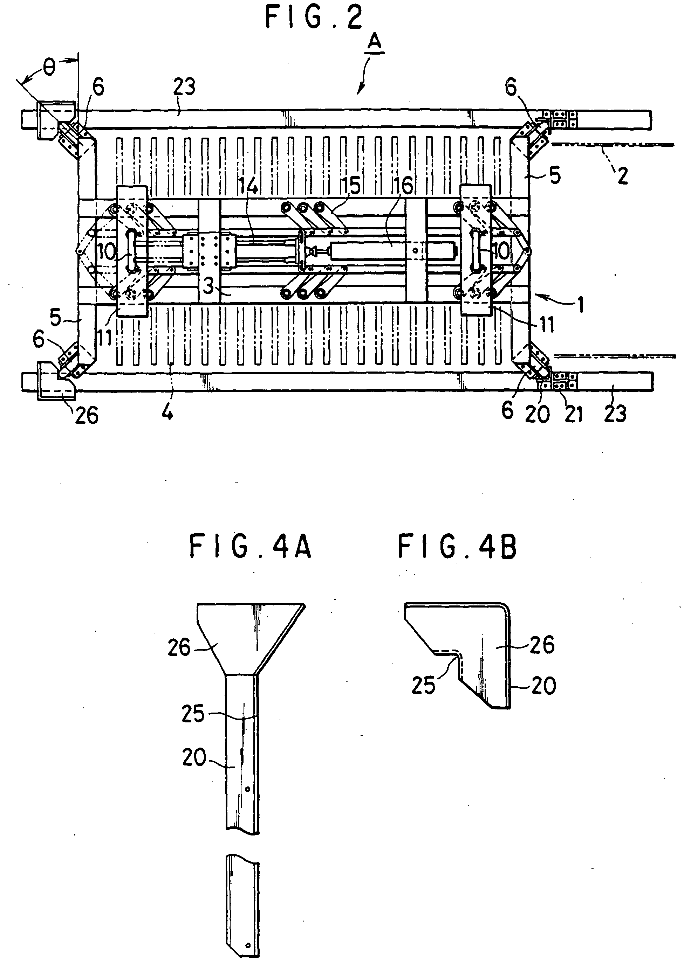

The reference numeral 20 indicates guide frames engaging the guide roller 6 for guiding up/down movement of the frame 1, and in an area around the chain conveyor 2, the guide frames are mounted on mounting frames 21 which are provided of the same number of guide rollers 6 (4 pieces in this embodiment) and mounted in their erect posture. In Fig.3, the reference numeral 22 indicates a coupling member for coupling upper guide sections of the mounting frames 21. The mounting frame 21 has a lower edge section fixed to a base frame 23. Each of the guide frame 20 has a traverse cross section having an approximately L-shaped bent form as shown in Fig.4A and in Fig.4B, and the guide roller 6 engages a bent inner angular surface 25. Also, an upper edge section of the guide frame 20 has an extending section 26 extending outward and upward like a taper, and even in a case where the hoisting apparatus A swinging back and forth and in the right and left directions at a position above the chain conveyor 2, is slightly displaced from a position of the guide frame 20 when the frame 1 moves down, it is possible to receive the guide roller 6 with the extending section 26 and accurately engage it with an angular section 25 of the guide frame 20.

In the apparatus according to the embodiment described above, the hoisting apparatus A for delivery of electrode plates is hoisted in a substantially horizontal position by an overhead crane not shown herein from the hanger 10 provided on the frame 1, and when the electrode plates 4 hoisted by the hooks 13 provided on the frame 1 of the hoisting apparatus A for delivery of electrode plates hoisted as described above is temporally placed on the chain conveyor 2 for example, the hoisting apparatus A for delivery of electrodes is moved down at a specified position above the chain conveyor 2. When the electrode plates 4 are hoisted above the chain conveyor 2 as shown in Fig.3, the hooks 13 are turned by about 90 degrees with a cylinder 16 to decouple the hooks 13 from the electrode plates 4. And then, the hoisting apparatus A for delivery of electrode plates is hoisted and moved to a position above an electrolytic bath to take up the next unit of electrode plates 4.

When moving up or down the hoisting apparatus A for delivery of electrode plates, four units of guide roller 6 provided in the side section of the frame 1 of the hoisting apparatus A engage an inner surface angular section 25 of the guide frame 20 respectively, move along the inner surface angular section 25 of the guide frame 20, and cause the hoisting apparatus A for delivery of electrode plates to smoothly and accurately move upward or downward without swing. Also even if the hoisting apparatus A for delivery of electrode plates slightly swings back and forth or in the right and left directions prior to engagement thereof with the inner surface angular section 25 of the guide frame 20, the guide roller 6 is accurately received by the expanding section 26 of the guide frame 20 and guided to the inner surface angular section 25 thereof. It should be noted that, although in the embodiment described above various types of sensor are employed for detecting completion of a work for hoisting electrode plates, any fault in hoisting electrode plates, placement of a hoisting apparatus on a guide apparatus, full charge of electrode plates, start of a work for carrying in electrode plates, or other operations, these matters are well known and detailed description thereof is omitted herein.

As described above, as smooth operation is enables by means of guidance for the hoisting apparatus A for delivery of electrode plates moving up and down by the guide frame as well as by the guide roller 6, so that, when replacing the electrode plates, the hoisting apparatus A for delivery of electrode plates can be stopped accurately at a specified position against the chain conveyor 2.

It should be noted that four units of guide roller 6 are provided at four corners of the frame 1, and also four units of guide frames are arranged in the embodiment described above, but at least two units thereof each provided at an opposite position in a diagonal direction are enough for achieving the purpose. The chain conveyor 2 for delivery of electrode plates is employed as an example of the electrode plate stock space in a preferred embodiment, but it may not always be the chain conveyor 2 for delivery of electrode plates, and for instance, an electrolytic bath may be used. In a case where an electrolytic bath is used as an electrode plate stock space, when the hoisting apparatus A for delivery of electrode plates is stopped at a specified position against the electrolytic bath and the electrode plates 4 are replaced with other ones, manual labor conventionally performed by a specific operator such as giving signs for positioning the hoisting apparatus A for delivery of electrode plates to an overhead crane operator or for fine positional adjustment of electrode plates when carrying in or out the electrode plates is not required at all. Also, the frame 1 for electrode plates used in the embodiment described above is for cathode plates, but it is only one example, and it may be for anode plates, or for both anode and cathode like in the conventional technology.

## Claims

1. A guide apparatus for up/down movement to and from an electrode plate stock space of a hoisting apparatus (A) comprising a frame (1) for delivery of electrode plates (4) moved to a position above the electrode plate stock space by an overhead crane when electrode plates are carried into or out from the electrode plate stock space, said guide apparatus comprising: rotatable guide rollers (6) thrusting outwardly provided at a specified angle (Θ), preferably 45°, with respect to an extending piece (5), of said frame (1), which extending pieces extending in the same direction as the electrode plates (4) and provided at four corners of the frame (1) having a rectangular form when viewed from a top; and guide rails (20) for guiding up/down movement of the hoisting apparatus (A) are provided in errect posture for engagement with the guide rollers (6) and fixedly connected to a base frame (23) arranged at the electrode plate stock space, wherein the guide rails, the number thereof being equal to that of the guide rollers (6), each having a substantially L-shaped cross-section and a guide length larger than height of the electrode plate (4) hoisted by the hoisting apparatus (A), the guide rollers (6) movably engage the inner surface angular section (25) of these guide rails (20), and further the upper edge section thereof is formed in an expanding section (26) for positioning, expanding upward and outward like a taper, the hoisting apparatus (A) being removeable from the guide rails (20) by lifting it by the overhead crane.

2. A guide apparatus for up/down movement of a hoisting apparatus for delivery of electrode plates according to claim 1; wherein the electrode plate stock space is a chain conveyor (2) for delivery of electrode plates.

3. A guide apparatus for up/down movement of a hoisting apparatus for delivery of electrode plates according to claim 1; wherein the electrode plate stock space is an electrolytic bath.

## Patentansprüche

1. Führungsvorrichtung für die Aufwärts/Abwärts-Bewegung in einen und aus einem Elektrodenplatten-Lagerraum von einer Hebevorrichtung (A) mit einem Rahmen (1) zum Transport von Elektrodenplatten (4), die durch einen Deckenlaufkran in eine Position über dem Elektrodenplatten-Lagerraum bewegt wird, wenn die Elektrodenplatten in den oder aus dem Elektrodenplatten-Lagerraum getragen werden, wobei die Führungsvorrichtung folgendes umfaßt: nach außen schiebende drehbare Führungsrollen (6), die in einem festgelegten Winkel (θ), vorzugsweise 45°, bezüglich eines langgestreckten Stücks (5) des Rahmens (1) vorgesehen sind, wobei sich die langgestreckten Stücke in derselben Richtung erstrecken wie die Elektrodenplatten (4), und die an den vier Ecken des Rahmens (1), der von oben gesehen eine rechteckige Form aufweist, vorgesehen sind; und Führungsschienen (20) zum Führen der Aufwärts/Abwärts-Bewegung der Hebevorrichtung (A) in aufrechter Lage zum Eingriff in die Führungsrollen (6) vorgesehen sind und fest mit einem Grundrahmen (23) verbunden sind, der am Elektrodenplatten-Lagerraum angeordnet ist, wobei die Führungsschienen, deren Anzahl gleich jener der Führungsrollen (6) ist, jeweils einen im wesentlichen L-förmigen Querschnitt und eine größere Führungslänge als die Höhe der Elektrodenplatte (4) aufweisen, die durch die Hebevorrichtung (A) angehoben wird, wobei die Führungsrollen (6) beweglich mit dem Winkelabschnitt (25) der Innenfläche dieser Führungsschienen (20) in Eingriff stehen, und ferner der obere Kantenabschnitt derselben in einem sich aufweitenden Abschnitt (26) zum Positionieren ausgebildet ist, welcher sich wie ein Kegel nach oben und nach außen aufweitet, wobei die Hebevorrichtung (A) aus den Führungsschienen (20) durch Anheben derselben durch den Deckenlaufkran entnehmbar ist.

2. Führungsvorrichtung für die Aufwärts/Abwärts-Bewegung einer Hebevorrichtung zum Transport von Elektrodenplatten nach Anspruch 1; wobei der Elektrodenplatten-Lagerraum ein Kettenförderer (2) zum Transport von Elektrodenplatten ist.

3. Führungsvorrichtung für die Aufwärts/Abwärts-Bewegung einer Hebevorrichtung zum Transport von Elektrodenplatten nach Anspruch 1; wobei der Elektrodenplatten-Lagerraum ein Elektrolysebad ist.

## Revendications

1. Dispositif de guidage pour déplacer vers le haut/bas, en direction et à partir d'un espace de stockage de plaques formant électrodes, un appareil de levage (A) comprenant un bâti (1) destiné à délivrer des plaques formant électrodes (4) et amené jusqu'à une position située au-dessus de l'espace de stockage de plaques formant électrodes par un pont roulant suspendu, lorsque les plaques formant électrodes sont transportées dans ou hors de l'espace de stockage de plaques formant électrodes, ledit dispositif de guidage comprenant des galets de guidage rotatifs (6) exerçant une poussée vers l'extérieur, qui sont disposés à un angle spécifié (θ), de préférence 45°, par rapport à un élément allongé (5) dudit bâti (1), l'élément allongé s'étendant dans la même direction que les plaques formant électrodes (4), et qui sont prévus aux quatre coins du bâti (1), lequel a, vu de dessus, une forme rectangulaire ; et des rails de guidage (20) destinés à guider le mouvement vers le haut/bas de l'appareil de levage (A), qui sont disposés dans une position verticale en vue d'une coopération avec les galets de guidage (6) et qui sont reliés de manière fixe à un châssis de base (23) disposé au niveau de l'espace de stockage de plaques formant électrodes, les rails de guidage dont le nombre est égal à celui des galets de guidage (6) ayant chacun une section transversale sensiblement en forme de L et une longueur de guidage supérieure à la hauteur de la plaque formant électrode (4) levée par l'appareil de levage (A), et les galets de guidage (6) venant en prise de manière mobile avec la partie angulaire de surface intérieure (25) desdits rails de guidage (20) qui comportent, en outre, au niveau de leur portion de bord supérieure, une partie de positionnement (26) qui s'élargit vers le haut et vers l'extérieur à la manière d'un cône, l'appareil de levage (A) pouvant être sorti des rails de guidage (20) en étant hissé par le pont roulant suspendu.

2. Dispositif de guidage pour déplacer vers le haut/bas un appareil de levage servant à délivrer des plaques formant électrodes, selon la revendication 1, dans lequel l'espace de stockage de plaques formant électrodes est un convoyeur à chaîne (2) destiné à délivrer les plaques formant électrodes.

3. Dispositif de guidage pour déplacer vers le haut/bas un appareil de levage servant à délivrer des plaques formant électrodes, selon la revendication 1, dans lequel l'espace de stockage de plaques formant électrodes est un bain électrolytique.
